# EUROPÄISCHE PATENTSCHRIFT

(11) **EP 3 415 772 B1**
(45) Veröffentlichungstag und Bekanntmachung des Hinweises auf die Patenterteilung: **29.11.2023**
(21) Anmeldenummer: 17175456.7
(22) Anmeldetag: 12.06.2017
(51) Int. Cl.: F16B 11/00, F16B 5/01

(54) **VERFAHREN ZUM VERBINDEN EINES ANBAUTEILS MIT EINEM SANDWICHBAUTEIL, VERWENDUNG EINER POLYMERZUSAMMENSETZUNG UND VERBUNDBAUTEIL**
METHOD FOR CONNECTING AN ATTACHMENT TO A SANDWICH COMPONENT, USE OF A POLYMER COMPOSITION AND COMPOSITE COMPONENT
PROCÉDÉ D'ASSEMBLAGE D'UN ÉLÉMENT CONSTITUTIF À UN COMPOSANT SANDWICH, UTILISATION D'UNE COMPOSITION POLYMÈRE ET COMPOSANT COMPOSITE

(43) Veröffentlichungstag der Anmeldung: 19.12.2018
(73) Patentinhaber: nolax AG, 6203 Sempach Station (CH)
(72) Erfinder: Wolf, Thomas, 6025 Neudorf (CH); Steiner, Patrick, 6467 Schattdorf (CH); Fischer, Marcel, 6026 Rain (CH)
(74) Vertreter: Hepp Wenger Ryffel AG

(56) Entgegenhaltungen:
- EP-A1- 1 503 090
- EP-A1- 3 275 645
- DE-A1- 10 155 312
- DE-C1- 19 710 824

## Beschreibung

Die Erfindung betrifft ein Verfahren zum Verbinden eines Anbauteils mit einem Sandwichbauteil, die Verwendung einer Polymerzusammensetzung und ein Verbundbauteil gemäss den Oberbegriffen der unabhängigen Ansprüche.

Als Konstruktionsweise bezeichnet die Sandwichbauweise eine Form des Leichtbaus, bei der die Bauteile aus kraftaufnehmenden festen Decklagen bestehen, die durch einen relativ weichen, meist leichten, Kernwerkstoff (Zwischenschicht) auf Abstand gehalten werden. Diese Teile sind bei geringem Gewicht sehr biege- und beulsteif. Ihre Berechnung wird im Bauwesen nach der linearen Sandwichtheorie vorgenommen. Der Kern kann beispielsweise aus Papierwaben, Metallwaben, insbesondere Aluminiumwaben, Schaumstoffen, beispielsweise Hartschaum, Mineralwolle oder Balsaholz bestehen. Er überträgt auftretende Schubkräfte und stützt die Decklagen. Oft wird auch die wärmedämmende und akustische Isolationseigenschaft der sehr leichten Kernwerkstoffe genutzt. Als Decklagen werden unter anderem Blech, Metalle wie Aluminium, Chrom-Nickel-/Verzinkt Stahl, Faserverbundwerkstoffe; Kunststoffe wie Polypropylen (PP), Polyvinylchlorid (PVC), Polysulfon (PS), Polyurethan (PUR); faserverstärkte Kunststoffe wie Glasfaserverstärkter Kunststoff (GFK), Aramid, Kohlenstofffaserverstärkter Kunststoff (CFK); Holzwerkstoffe wie (Sperr)holz, hochdichte Faserplatten (HDF); mineralische Werkstoffe, insbesondere Glas; Stein benutzt. Oft werden Krafteinleitungspunkte mit Verstärkungen versehen.

Für das Verbinden von Sandwichbauteilen mit weiteren Bauteilen werden handelsübliche Lösungen mit Verstärkungen, beispielsweise sogenannte Inserts, welche in die Sandwichstruktur eingebracht werden, oder sogenannte Onserts, welche auf die Sandwichstruktur aufgebracht werden, genutzt. Es gilt bezüglich der Kraftübertragung grundsätzlich zu unterscheiden zwischen der Kraftübertragung von dem mechanischen Verbindungsmittel auf das Insert oder Onsert und der Kraftübertragung vom Insert oder Onsert auf das eigentliche Bauteil.

Handelsübliche punktuelle Krafteinleitungen in Leichtbauwerkstoffe, insbesondere Blindbefestigungen in Sandwichpaneelen bzw. Sandwichbauteilen, weisen den Nachteil auf, dass das Insert oder Onsert für die Krafteinleitungen manuell eingebracht werden muss, da die Automatisierung aufwendig ist. Dies führt zu hohen Prozesskosten und geringer Prozesssicherheit. Des Weiteren ist nachteilig, dass durch standardisierte Verbindungsmittel das Produktdesign und die Flexibilität der Komponenten herstellerseitig stark limitiert sind.

Aus der EP 1 503 090 A1 ist ein Befestigungsverfahren für eine Sandwichstruktur bekannt.

Es ist daher eine Aufgabe der Erfindung die Nachteile des Stands der Technik zu überwinden. Insbesondere ist es eine Aufgabe der Erfindung ein Verfahren zum Verbinden eines Sandwichbauteils mit einem Anbauteil bereitzustellen, das automatisierbar, schnell und kostengünstig ist und eine feste Verbindung zwischen Sandwichbauteil und Anbauteil gewährleistet. Es ist auch Aufgabe der Erfindung, ein Verbundbauteil herzustellen, das kostengünstig in der Herstellung ist und gute Verbundeigenschaften aufweist. Diese Aufgaben werden durch die Merkmale der unabhängigen Ansprüche gelöst.

Die Erfindung betrifft ein Verfahren zum Verbinden eines Anbauteils mit einem Sandwichbauteil. Das Verfahren umfasst den Schritt des Bereitstellens eines Sandwichbauteils. Das Sandwichbauteil umfasst eine erste Hauptfläche mit einer ersten Decklage und eine zweite Hauptfläche mit einer zweiten Decklage, insbesondere eine erste Deckplatte und eine zweite Deckplatte. Die erste Decklage und/oder die zweite Decklage weist/weisen mindestens eine Öffnung auf. Das Sandwichbauteil umfasst mindestens eine Zwischenschicht, wobei die Zwischenschicht zwischen der ersten Decklage und der zweiten Decklage positioniert ist. Die Zwischenschicht weist somit eine Dicke auf, die dem Abstand der ersten Decklage zu der zweiten Decklage entspricht.

Des Weiteren umfasst das Verfahren die Schritte der Bereitstellung eines Anbauteils mit mindestens einer ersten Einfüllöffnung sowie das Fügen des Anbauteils an das Sandwichbauteil. Das Fügen erfolgt derart, dass die erste Einfüllöffnung des Anbauteils und die mindestens eine Öffnung des Sandwichbauteils kommunizierend angeordnet werden. Eine aushärtbare Polymerzusammensetzung wird über die erste Einfüllöffnung des Anbauteils in die mindestens eine Öffnung des Sandwichbauteils eingebracht, derart, dass das Anbauteil und das Sandwichbauteil nach dem Aushärten der Polymerzusammensetzung durch die Polymerzusammensetzung miteinander verbunden werden.

Unter "kommunizierend" wird dabei verstanden, dass die Polymerzusammensetzung über die Einfüllöffnung des Anbauteils in die Öffnung des Sandwichbauteils gelangen kann.

Unter den Hauptflächen des Sandwichbauteils werden die flächigen Seiten verstanden, welche nicht von der Zwischenschicht gebildet werden. Die Hauptflächen entsprechen also den Flächen der Decklagen, welche von der Zwischenschicht wegweisen.

Auf diese Weise wird eine Verbindung eines Sandwichbauteils mit einem Anbauteil ermöglicht, die ohne zusätzliche Verbindungsmittel, wie beispielsweise Schrauben, auskommt und dennoch einen festen Verbund formt. Die Polymerzusammensetzung kann beispielsweise eingespritzt werden. Automatisierte Prozesse sind möglich. Durch die Abstimmung der Eigenschaften der Polymerzusammensetzung können die physikalischen Eigenschaften des Krafteinleitungspunktes und damit des Bauteils optimiert werden. Des Weiteren können die Härte- und Elastizitätseigenschaften innerhalb eines Anschlusspunktes eingestellt werden, um so eine optimierte Krafteinleitung in die Bauteilstrukturen zu erzielen. Dies ist insbesondere bei dynamischen Lasten vorteilhaft.

Abhängig von Lastfall und Materialisierung kann sich die Polymerzusammensetzung:
a) nur bis maximal einer der Zwischenschicht zugewandten Oberfläche der ersten Decklage erstrecken. Die Kräfte werden damit nur minimal in die Zwischenschicht und auf die gegenüberliegende Deckschicht transferiert. Das reduziert das Risiko, dass die Verbindungsstelle auf der gegenüberliegenden zweiten Decklage sichtbar wird bzw. sich abzeichnet.
b) in die Zwischenschicht erstrecken ohne jedoch eine der Zwischenschicht zugewandte Oberfläche der zweiten Decklage zu berühren. Das hat den Vorteil, dass die Kräfte auf die Zwischenschicht übertragen werden, jedoch die zweite Decklage unberührt bzw. unverändert bleibt.
c) bis an die der Zwischenschicht zugewandten Oberfläche der zweite Decklage oder bis durch die zweite Decklage hindurch erstecken. Damit können die Kräfte über beide Decklagen abgetragen werden.

Besonders bevorzugt wird die Polymerzusammensetzung derart eingebracht, dass die Polymerzusammensetzung besonders tief in die Zwischenschicht ragt, d.h. besonders nah an die gegenüberliegende Decklage heranreicht. Es entsteht so eine Verankerung der ausgehärteten Polymerzusammensetzung im Sandwichbauteil. Die Verankerung erstreckt sich vorzugsweise durch mindestens 10 % der Dicke der Zwischenschicht.

Es ist auch möglich, dass die erste Decklage und die zweite Decklage jeweils mindestens eine Öffnung aufweisen und die mindestens eine Öffnung der ersten Decklage und die mindestens eine Öffnung der zweiten Decklage mit mindestens einer Einfüllöffnung des Anbauteils kommunizierend angeordnet sind.

Die erste Einfüllöffnung kann in eine Kavität zwischen dem Anbauteil und dem Sandwichbauteil münden. Die Kavität entsteht, wenn die beiden Bauteile gefügt werden und ist gebildet durch die mindestens eine Einfüllöffnung im Anbauteil und die mindestens eine Öffnung im Sandwichbauteil. Die Kavität kann beim Einbringen der Polymerzusammensetzung über die Einfüllöffnung mit der Polymerzusammensetzung gefüllt werden. Es ist auch möglich, dass das Anbauteil mehr als eine Einfüllöffnung aufweist. Die mehreren Einfüllöffnungen können in ein und dieselbe Kavität münden und mit einer Öffnung im Sandwichbauteil kommunizierend angeordnet sein. Es ist auch denkbar, dass eine Einfüllöffnung des Anbauteils mit zwei oder mehreren Öffnungen im Sandwichbauteil kommunizierend angeordnet ist. Die Öffnungen im Sandwichbauteil können dabei in der ersten Decklage und/oder der zweiten Decklage angeordnet sein. Es ist aber auch möglich, dass zwischen dem Sandwichbauteil und dem Anbauteil beim Fügen mehrere Kavitäten ausgebildet werden und jeweils eine Einfüllöffnung in eine der Kavitäten mündet.

Die Kavität ermöglicht das Fügen der Bauteile über Haftungsflächen der Bauteile durch Verkleben mittels einer Polymerzusammensetzung.

Die aushärtbare Polymerzusammensetzung ist vorzugsweise ein Klebstoff, insbesondere ein Zwei-Komponenten Klebstoff.

Die Polymerzusammensetzung kann entsprechend den Formulierungen offenbart in EP 2 589 478 A1 gewählt werden. Diese werden durch Bezugnahme aufgenommen. Die Polymerzusammensetzung ist insbesondere ein Klebstoff mit den folgenden Eigenschaften. Der Klebstoff ist bevorzugt ein schnell aushärtender Zwei-KomponentenKlebstoff auf Basis von Polyharnstoff wie in EP 1 958 975 B1 oder EP 2 871 194 beschrieben. Diese werden durch Bezugnahme aufgenommen.

Bevorzugt umfasst die Polymerzusammensetzung eine isocyanathaltige Komponente A und eine aminhaltige Komponente B. Die Komponente A enthält ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3. Die Komponente B enthält wenigstens ein Di- und/oder Polyamin, vorzugsweise ein Polyetherdiamin und/oder Polyetherpolyamin. Das stöchiometrische Verhältnis von Isocyanatgruppen in Komponente A zu Amingruppen in Komponente B beträgt hierbei 0,5 bis 1,2, besonders bevorzugt 1.

Besonders bevorzugt umfasst die Polymerzusammensetzung eine erste Komponente A und eine zweite Komponente B. Die Komponente A enthält ein monomeres Polyisocyanat, insbesondere monomeres Diisocyanat, und ein isocyanat-terminiertes Präpolymer und/oder ein Präpolymergemisch mit einer Isocyanatfunktionalität ≥ 1.7, bevorzugt im Bereich von 1.7 < f_{NCO} < 3, besonders bevorzugt im Bereich von 2 < f_{NCO} < 3. Die zweite Komponente B enthält ein Di- und/oder Polyamin, insbesondere ein Polyetherdiamin und/oder ein Polyetherpolyamin; und einen Trimerisierungskatalysator. Das stöchiometrische Verhältnis von Isocyanatgruppen in der ersten Komponente A zu in der Zusammensetzung enthaltenen isocyanatreaktiven Wasserstoffatomen in der zweiten Komponente B beträgt 7.5 bis 25, bevorzugt 10 bis 20, besonders bevorzugt 15. Es wird somit eine Zwei-Komponenten-Polymerzusammensetzung verwendet, bei welcher in einem ersten Schritt über eine Reaktion des im Überschuss vorhandenen monomeren Polyisocyanats (insbesondere des Diisocyanats) mit dem Polyamin ein zweites Präpolymer gebildet wird. Diese Reaktion ist stark exotherm. Gleichzeitig erfolgt eine Vernetzung des isocyanat-terminierten Präpolymers der Komponente A durch in der Komponente B bereitgestellte Amine. Im weiteren Reaktionsverlauf kommt es unter dem Einfluss von einschlägigen Katalysatoren, insbesondere Kaliumoctoat, vorwiegend zu einer Trimerisierung der vorhandenen Isocyanatgruppen. So weist die Polymerzusammensetzung im Vergleich zu üblichen Polyurethan- und Polyurea-Klebstoffen sowohl höhere Zugfestigkeit und Wärmebeständigkeit als auch eine höhere Schlagzähigkeit auf hals andere hochfeste Klebstoffe wie beispielsweise Epoxidharze.

Grundsätzlich sind auch andere zweikomponentige, zu Duromeren aushärtende flüssige Klebstoffe auf Basis von Polyurethan, Epoxid oder Acrylat einsetzbar. Der Klebstoff wird als flüssig bezeichnet im bestimmungsgemässen Auftragszustand bei einer Viskosität von <10000 mPas, vorzugsweise <300 mPas, idealerweise <100 mPas (gemessen im Mischkopf des Applikators bei 35°C-65°C, vorzugsweise 50°C und einen Druck von 70-140 bar, vorzugsweise 100 bar). Diese Mischviskosität kann durch Anwählen der Temperatur der Komponenten weiter optimiert werden. Die Viskosität wurde nach dem Brookfield-Verfahren mit Spindel 4 und einer Rotationsgeschwindigkeit von 20 Upm bestimmt.

Das Aushärten bezeichnet in diesem Zusammenhang die chemische Verfestigung des Klebstoffes durch Polymerisation, -kondensation und -addition. Derart wird eine schnell insbesondere chemisch abbindende, strukturell belastbare Polymerzusammensetzung bereitgestellt.

Derart wird eine Polymerzusammensetzung eingebracht, die nach dem Verfestigen strukturell belastbar und insbesondere nicht expandierend ist. Durch die exothermen Eigenschaften der Polymerzusammensetzung kann die Zwischenschicht und/oder bestehende Klebeschichten des Sandwichbauteils beim Abreagieren der Polymerzusammensetzung bereichsweise aufgeschmolzen werden. Derart wird die Verankerung der Polymerzusammensetzung verbessert.

Die aushärtbare Polymerzusammensetzung weist eine Topfzeit im Bereich von 1 bis 15 sek auf, bevorzugt 2 bis 10 sek, besonders bevorzugt 3 bis 7 sek. Eine solche Polymerzusammensetzung hat den Vorteil, dass der Verbund aus Sandwichbauteil und Anbauteil umgehend weiterverarbeitet oder entsprechend der geplanten Verwendung eingesetzt werden kann, da die Polymerzusammensetzung in sehr kurzer Zeit die notwendige Festigkeit aufweist. Beispielsweise kann eine belastbare Verbindung mit einem weiteren Bauteil hergestellt werden.

Unter der Topfzeit wird gemäss DIN EN 923:1998-05 die Zeitspanne verstanden, in der ein Mehrkomponentenklebstoff nach dem Mischen verarbeitet werden kann. Die Topfzeit wurde nach dem "Verfahren 3: Bestimmung durch manuelle Auftragung" der DIN EN 14022:2010 bestimmt (Deutsche Fassung). Dabei muss selbstverständlich die schnelle Reaktionszeit des Systems berücksichtigt werden.

Des Weiteren kann die Polymerzusammensetzung eine stoffschlüssige, d.h. adhäsive, und/oder formschlüssige und/oder kraftschlüssige Verbindung bilden. Die stoffschlüssige Verbindung ist bevorzugt zwischen der Polymerzusammensetzung und der Zwischensicht und/oder der ersten Decklage und/oder der zweiten Decklage ausgebildet nachdem die Polymerzusammensetzung ausgehärtet ist. Auch durch diese Ausgestaltung werden besonders starke Kräfte eingeleitet und auf die Decklagen abgeleitet.

Die Polymerzusammensetzung kann im Sandwichbauteil eine Hinterschneidung ausbilden. Dabei ist die Hinterschneidung bevorzugt an der ersten Decklage und/oder der zweiten Decklage, besonders bevorzugt an der der Zwischenschicht zugewandten Oberfläche der ersten Decklage und/oder der zweiten Decklage, ausgebildet. Die Hinterschneidung wird vorzugsweise durch die Polymerzusammensetzung im ausgehärteten Zustand gebildet. Somit kann eine formschlüssige Verbindung zwischen der Polymerzusammensetzung und der ersten und/oder der zweiten Decklage ausgebildet werden, sodass besonders starke Kräfte eingeleitet und auf die Decklagen abgeleitet werden können.

Die Polymerzusammensetzung kann im Anbauteil eine Hinterschneidung aufweisen. Die Hinterschneidung wird vorzugsweise durch die Polymerzusammensetzung im ausgehärteten Zustand gebildet. Beispielsweise kann es sich bei dem Anbauteil um ein weiteres Sandwichbauteil handeln. Somit kann beispielsweise eine formschlüssige Verbindung zwischen der Polymerzusammensetzung und des Anbauteils ausgebildet werden, sodass besonders starke Kräfte eingeleitet und auf das Anbauteil abgeleitet werden können.

Die Hinterschneidungen können entweder im Sandwichbauteil oder im Anbauteil oder in beiden Bauteilen vorliegen. Liegen die Hinterschneidungen in beiden Bauteilen vor, so können diese genutzt werden, um die Kräfte auf beide Bauteile abzuleiten. Dies ermöglicht eine höhere Kraftaufnahme.

Die Polymerzusammensetzung kann im Sandwichbauteil eine maximale Ausdehnung in einer Richtung parallel zu den Hauptflächen des Sandwichbauteils aufweisen, die grösser ist als der maximale Durchmesser der Öffnung des Sandwichbauteils. Die maximale Ausdehnung entspricht dabei der Ausdehnung der Polymerzusammensetzung im ausgehärteten Zustand. Die Ausdehnung kann strukturiert oder unstrukturiert sein. Unter "strukturiert" wird dabei verstanden, dass die Ausdehnung bestimmte Formen annehmen kann. Die Ausdehnung kann beispielsweise sternförmig sein. Auch eine ovale, rechteckige, quadratische, dreieckige Ausdehnung ist denkbar. Es ist aber auch möglich, dass das Material der Zwischenschicht eine unstrukturierte Ausdehnung erlaubt. Beispielsweise können bei einem locker gepackten Material Hohlräume zwischen dem Material gefüllt werden, bis das Polymer aushärtet, ohne dass sich konkret definierbare Formen ausbilden.

Durch diese Art der Ausdehnung wird die Polymerzusammensetzung optimal im Sandwichbauteil verankert, wodurch ein besonders stabiler und belastbarer Verbund aus Sandwichbauteil und Anbauteil resultiert.

Die Öffnung des Sandwichbauteils kann ausgewählt sein aus der Gruppe Schlitz, Loch, insbesondere kreisrundes Loch. Diese können mechanisch durch Bohren, Fräsen, Stanzen, Schlitzen, Perforieren, Lasern, Schleifen, Schneiden, chemisch oder thermisch eingebracht werden. Dabei kann eine Öffnung, mehrere Öffnungen, mehrere vergleichsweise kleine Öffnungen, welche rund, eckig oder schlitzartig ausgestaltet sein. Freiformen sind ebenfalls möglich. Derart kann die Polymerzusammensetzung besonders vorteilhaft in die Zwischenschicht eingebracht werden.

Für die Herstellung von Hinterschneidungen können Spezialwerkzeuge wie Fräser, Bohrer oder Schneider eingesetzt werden.

Durch die Wahl der Öffnung als eine nicht-runde Öffnung, beispielsweise als Schlitz, wird ein Anschlusspunkt bereitgestellt, der einen Formschluss als Verdrehsicherung der verfestigten Polymerzusammensetzung sicherstellt. Derart können grösserer Kräfte aufgenommen werden.

Bei der Wahl der Öffnung als kleine, schmale Öffnungen kann eine verdeckte Montage ermöglicht werden.

Die mindestens eine Zwischenschicht weist eine Hohlkammerstruktur auf. Unter Hohlkammerstruktur kann dabei sowohl eine Kammer als auch die Ausbildung mehrere Kammern verstanden werden. Die Hohlkammerstruktur kann beispielsweise Waben, Wellen, Poren, Rippen, Stege, Pyramiden oder Napfformen aufweisen. Aber auch andere Strukturen sind denkbar. Die einzelnen Kammern können mit einem Material gefüllt oder mit einem Gas oder Gasgemisch und somit visuell "ungefüllt" vorliegen. Die Kammern können auch abwechselnde gefüllte und ungefüllte Bereiche aufweisen. Sind die Kammern ungefüllt, kann die Haftung mittels Kraft- und/oder Form- und/oder Stoffschluss erfolgen. Der Stoffschluss kann chemisch über molekulare Kräfte und/oder physikalisch durch Anbinden an die Materialoberfläche erfolgen.

Ist die Hohlkammerstruktur beispielsweise eine Wabenstruktur, so können einzelne Waben gefüllt sein und einzelne Waben nur ein Gas oder Gasgemisch, beispielsweise Luft, enthalten. Es ist auch denkbar, dass die einzelnen Waben nur teilweise, beispielsweise zur Hälfte, mit einem Material gefüllt sind und der verbleibende Teil ein Gasgemisch, beispielsweise Luft, aufweist. Ähnlich kann es sich mit den anderen genannten Hohlkammerstrukturen verhalten.

Durch die Hohlkammerstruktur der Zwischenschicht kann das Gewicht des Sandwichbauteils reduziert werden bei dennoch sehr hoher Stabilität.

Die Hohlkammerstrukturen können gefüllt und ungefüllt sein. Das Material kann bevorzugt ausgewählt sein aus Karton, Kunststoff, Metall, Faserverbundwerkstoff, Holzwerkstoff, Schaum-Werkstoff, Faser-Werkstoff und Schütt-Werkstoff aus Kunststoffen wie Polyvinylchlorid (PVC), Polyethylenterephthalat (PET), Polymethacrylimid (PMI), expanded Polystyren (EPS), extrudierter Polystyren-Schaum (XPS), recyceltem Material, Holzwerkstoffen wie Balsaholz, Weichfaser, Spanmaterial, Fasermaterial, Verbundmaterial, Röhrenspan, leichte Massivholzplatte; Glas; Stein; Metallen wie Aluminium.

Die Decklagen des Sandwichbauteils können bevorzugt ausgewählt sein aus Metallen wie Aluminium, Chrom-Nickel-/Verzinkt Stahl; Kunststoffen wie Polypropylen (PP), Polyvinylchlorid (PVC), Polysulfon (PS), Polyurethan (PUR); faserverstärkten Kunststoffen wie Glasfaserverstärkter Kunststoff (GFK), Aramid, Kohlenstofffaserverstärkter Kunststoff (CFK); Holzwerkstoffen wie Sperrholz, hochdichte Faserplatten (HDF); mineralischen Werkstoffen, insbesondere Glas; Stein

Das Anbauteil kann eine Platte; ein Verbindungselement und/oder Befestigungselement; eine Federung; ein elektrisches Element oder ein Beschlag sein. Eine Platte kann beispielsweise eine Adapterplatte sein. Das Verbindungselement und/oder Befestigungselement kann ein Profil, Winkel, Rohr, Hülse, Mutter oder Beschlag sein. Als elektrisches Element sind beispielsweise Module, Boxen, Konsolen oder Lichtinstallationen denkbar.

Auf diese Art lassen sich eine Vielzahl verschiedener Bauteile an das Sandwichbauteil anbringen. Das Sandwichbauteil ist vielseitig einsetzbar.

Ein weiterer Aspekt der Erfindung betrifft die Verwendung einer Polymerzusammensetzung zum Verbinden eines Anbauteils mit einem Sandwichbauteil, vorzugsweise in einem Verfahren wie vorhergehend beschrieben.

Bevorzugt ist die Polymerzusammensetzung ein chemisch vernetzbarer Klebstoff, insbesondere ein ein-komponentiger oder zwei-komponentiger Klebstoff, oder ein Heissschmelzklebstoff, insbesondere ein Thermoplast, ist.

Insbesondere kann der Klebstoff wie vorhergehend bereits dargelegt gestaltet sein.

Ganz besonders bevorzugt umfasst die Polymerzusammensetzung eine isocyanathaltige Komponente A und eine aminhaltige Komponente B. Die Komponente A enthält ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3. Die Komponente B enthält wenigstens ein Di- und/oder Polyamin, vorzugsweise ein Polyetherdiamin und/oder Polyetherpolyamin. Das stöchiometrische Verhältnis von Isocyanatgruppen in Komponente A zu Amingruppen in Komponente B beträgt bevorzugt 0,5 bis 1,2 und besonders bevorzugt 1.

Eine solche Polymerzusammensetzung weist im Vergleich zu üblichen Polyurethan- und Polyurea-Klebstoffen sowohl höhere Zugfestigkeit und Wärmebeständigkeit als auch eine höhere Schlagzähigkeit auf als andere hochfeste Klebstoffe wie beispielsweise Epoxidharze.

Ein weiterer Aspekt der Erfindung betrifft ein Verbundbauteil umfassend ein Sandwichbauteil und ein Anbauteil. Das Sandwichbauteil weist in einer ersten Hauptfläche mit einer ersten Decklage und/oder in einer zweiten Hauptfläche mit einer zweiten Decklage mindestens eine vorgeformte Öffnung auf. Das Anbauteil weist eine vorgeformte Einfüllöffnung auf. Die Öffnung des Sandwichbauteils und die Einfüllöffnung des Anbauteils sind kommunizierend angeordnet und über eine ausgehärtete Polymerzusammensetzung miteinander verbunden. Das Sandwichbauteil und das Anbauteil sind vorzugsweise wie vorhergehend dargelegt ausgestaltet.

Vorzugsweise ist das Verbundbauteil durch ein Verfahren wie vorhergehend beschrieben erhältlich.

Ein solches Verbundbauteil kann vielseitig eingesetzt werden, beispielsweise im Bereich des Strassenverkehrs, insbesondere für Nutzfahrzeuge, PKW, Nutzfahrzeuge, Formel 1, Reisemobile, Zwei/Dreirad, temporäre Strassenbeläge; im Bereich des Schienenverkehrs, insbesondere Bahn, Tram, Seilbahnen; Luftfahrt, insbesondere Raumfahrt, Flugzeuge, Drohnen, Satelliten; Marine, insbesondere Yacht & Superyacht, Fluss-, Transport-, Kreuzfahrtschiffe, Ölplattformen, Offshore-Anlagen, Unterwasser; Bau, insbesondere Fassaden und Dächer, Böden, Brücken, Aufzug, Rolltreppen, mobile Behausung; Innenausbau, insbesondere Möbel, Decken, Wände, Böden, Ladenbau Messebau, Bühnenbau, Bühnenbau, Display, Türen, Trennwände, Türen; Sport, insbesondere Wintersport und Wassersport; Logistik, insbesondere Container, Tanks, Paletten, Verpackungen; Energie, insbesondere Wind-Energieanlagen, Solar-Anlagen; Maschinenbau, insbesondere Stanzwerkzeuge, Verkleidungen, bewegte Teile; Medizin, insbesondere Zahnimplantate, Implantate, Fixierungen; Wehrtechnik, insbesondere Raketen.

Nachfolgend wird die Erfindung anhand von exemplarischen Ausführungen näher beschrieben. Es zeigen:
- Figur 1:: Schnittskizze von einem erfindungsgemässen Verbundbauteil aus Sandwichbauteil und Anbauteil mit Polymerzusammensetzung;
- Figur 2:: Unterschiedliche Hohlkammerstrukturen der Zwischenschicht gemäss dem Bauteil aus Figur 1 in der Schnittansicht;[A, B, C]
- Figur 3:: Schnittskizze eines weiteren erfindungsgemässen Verbundbauteils;
- Figur 4:: Schnittansicht eines weiteren erfindungsgemässen Verbundbauteils;
- Figur 5:: Schnittansicht eines weiteren erfindungsgemässen Verbundbauteils.

Gleiche Bezugszeichen in den Figuren kennzeichnen gleich Bauelemente.

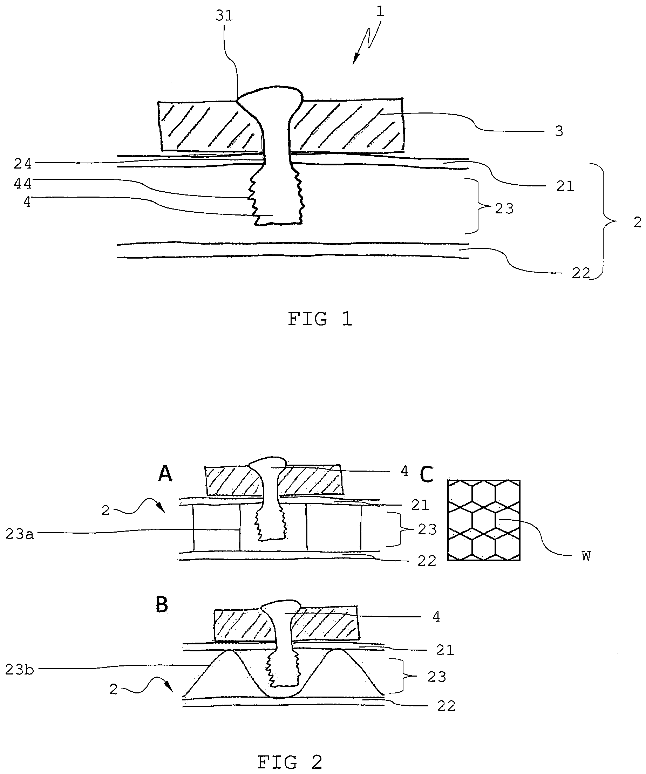

Figur 1 zeigt eine Schnittansicht eines Verbundbauteils 1 umfassend ein Sandwichbauteil 2 und ein Anbauteil 3. Das Sandwichbauteil 2 weist eine erste Decklage 21 und einer zweite Decklage 22 auf. Zwischen der ersten Decklage 21 und der zweiten Decklage 22 ist eine Zwischenschicht 23 angeordnet. Die Zwischenschicht 23 kann beispielsweise aus einem Schaumwerkstoff (nicht gezeigt) bestehen. Das Sandwichbauteil 2 weist in der ersten Decklage eine Öffnung 24 auf. Das Anbauteil 3 weist eine Einfüllöffnung 31 auf. Die Einfüllöffnung 31 und die Öffnung 24 sind kommunizierend angeordnet, in diesem Fall mit paralleler Ausrichtung. Zwischen der Einfüllöffnung 31 und der Öffnung 24 befindet sich eine ausgehärtete Polymerzusammensetzung 4, die zuvor über die Einfüllöffnung 31 eingespritzt wurde, so dass diese über die Öffnung 24 bis tief in die Zwischenschicht 23 hineinragt. Die Zacken 44 der ausgehärteten Polymerzusammensetzung 4 sind durch die Beschaffenheit der Zwischenschicht entstanden und können in Abhängigkeit des Materials der Zwischenschicht variieren.

Figur 2 zeigt das Verbundbauteil 1 aus Figur 1 mit unterschiedlichem Aufbau der Zwischenschicht 23. In Variante A besteht die Zwischenschicht 23 aus Waben 23a. Die Waben können gefüllt sein. In Figur 2A ist zumindest die Wabe, in welche die ausgehärtete Polymerzusammensetzung 4 ragt, gefüllt. In Figur C ist die Wabenstruktur W in einer Draufsicht gezeigt, wobei zumindest die obere Decklage 21 entfernt wurde. In Variante B besteht die Zwischenschicht 23 aus einzelnen Wellen 23b. Auch hier ist zumindest der Wellenbereich, in welche die ausgehärtete Polymerzusammensetzung 4 ragt, gefüllt.

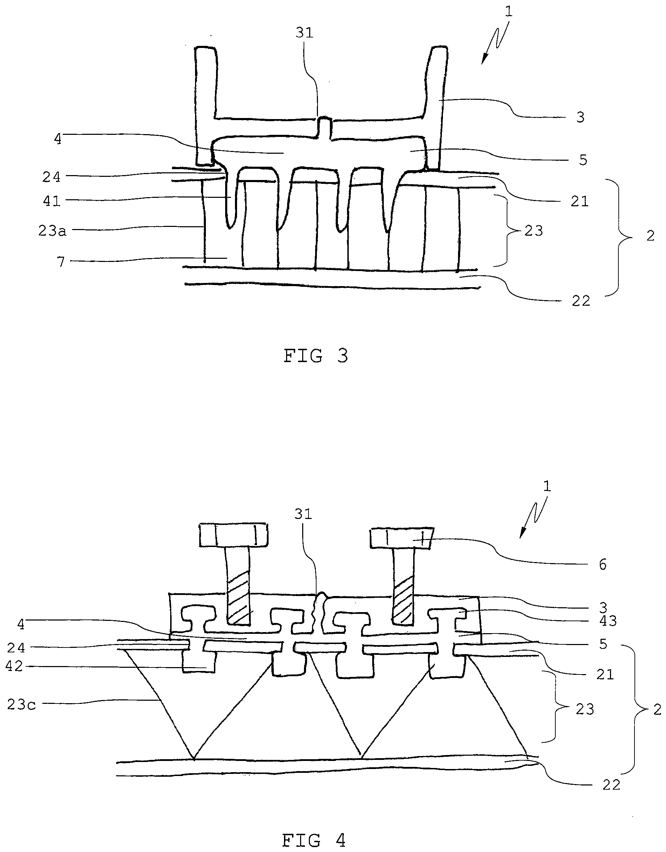

Figur 3 zeigt ein weiteres erfindungsgemässes Verbundbauteil 1 in der Schnittansicht, hergestellt mit dem erfindungsgemässen Verfahren. Das Sandwichbauteil 2 weist die erste Decklage 21 und die zweite Decklage 22 sowie die Zwischenschicht 23 in Form von Waben 23a auf. Die resultierende Hohlkammerstruktur ist mit einem Schaumstoff 7 gefüllt. Die erste Decklage 21 weist mehrere Öffnungen 24 auf. Auf das Sandwichbauteil 2 wurde ein Anbauteil 3 angebracht, wodurch eine Kavität 5 zwischen Anbauteil 3 und Sandwichbauteil 2 gebildet wurde. Die Einfüllöffnung 31 des Anbauteils 3 mündet in diese Kavität 5. Durch die Einfüllöffnung 31 wurde eine Polymerzusammensetzung gegeben, so dass die ausgehärtete Polymerzusammensetzung 4 Verankerungen 41 im Sandwichbauteil 2 ausbildet. Das Sandwichbauteil 2 wurde durch Füllung der Kavität 5 mit der Polymerzusammensetzung mit dem Anbauteil 3 kraftschlüssig verbunden. Die kommunizierende Anordnung zwischen Einfüllöffnung 31 und Öffnung 24 wurde durch die Kavität 5 erzeugt, die beide miteinander verbindet.

Figur 4 zeigt eine weiteres erfindungsgemässes Verbundbauteil 1, hergestellt mit dem erfindungsgemässen Verfahren. Das Anbauteil 3 und das Sandwichbauteil 2 bilden durch Fügen ebenfalls eine Kavität 5 aus. Diese Kavität 5 wird über die Einfüllöffnung 31 mit einer Polymerzusammensetzung gefüllt. Die erste Decklage 21 des Sandwichbauteils 2 weist vier Öffnungen 24 auf, durch die die Polymerzusammensetzung in die Zwischenschicht 23 geflossen ist. Die ausgehärtete Polymerzusammensetzung 4 bildet im Sandwichbauteil 2 Hinterschneidungen 42 aus. Diese können durch Bohren, Fräsen, Schneiden, Schlitzen, Perforieren, Lasern, Schleifen, chemisch oder thermisch erzeugt werden. Meist werden für Hinterschneidungen Spezialwerkzeuge wie Fräser, Bohrer oder Schneider eingesetzt. Das Anbauteil 3 weist ähnliche Hinterschneidungen 43 auf. Die Hohlkammerstruktur der Zwischenschicht 23 wird in diesem Konstrukt von pyramidalen Kammern 23c gebildet. Auf dem Anbaubauteil 3 sind weitere Verbindungselemente in Form von Schrauben 6 ausgebildet, die der Befestigung weiterer Elemente oder Bauteile (nicht gezeigt) dienen.

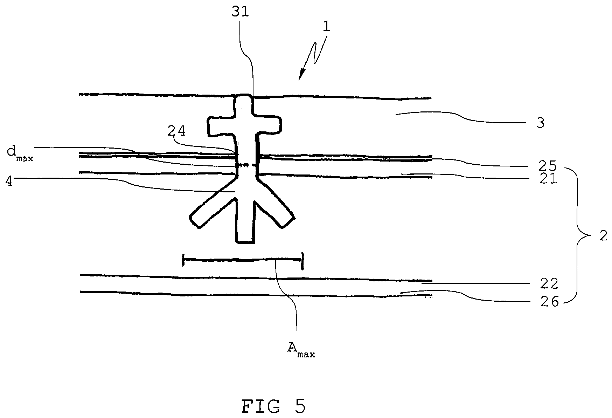

Figur 5 zeigt ein weiteres Verbundbauteil 1, das mit dem erfindungsgemässen Verfahren hergestellt wurde. Die Polymerzusammensetzung 4 wurde derart über die Einfüllöffnung 31 und die Öffnung 24 in das Sandwichbauteil 2 eingebracht, dass die ausgehärtete Polymerzusammensetzung 4 eine maximale Ausdehnung Aₘₐₓ parallel zu den Hauptflächen 25 und 26 der ersten Decklage 21 und zweiten Decklage 22 aufweist. Die maximale Ausdehnung Aₘₐₓ ist dabei grösser als der maximale Durchmesser dₘₐₓ der Öffnung 24 des Sandwichbauteils 2.

## Patentansprüche

1. Verfahren zum Verbinden eines Anbauteils (3) mit einem Sandwichbauteil (2) umfassend die Schritte:
a) Bereitstellen eines Sandwichbauteils (2) umfassend
- eine erste Hauptfläche (25) mit einer ersten Decklage (21) und eine zweite Hauptfläche (26) mit einer zweiten Decklage (22), insbesondere eine erste Deckplatte und eine zweite Deckplatte, wobei die erste Decklage (21) und/oder die zweite Decklage (22) mindestens eine Öffnung (24) aufweist; und
- mindestens eine Zwischenschicht (23), wobei die Zwischenschicht (23) zwischen der ersten Decklage (21) und der zweiten Decklage (22) positioniert ist;
b) Bereitstellen eines Anbauteils (3) mit mindestens einer ersten Einfüllöffnung (31), wobei das Anbauteil keine Sandwichplatte ist;
c) Fügen des Anbauteils (3) an das Sandwichbauteil (2), derart, dass die erste Einfüllöffnung (31) des Anbauteils (3) und die mindestens eine Öffnung (24) des Sandwichbauteils (2) kommunizierend angeordnet werden;
wobei eine aushärtbare Polymerzusammensetzung (4) über die erste Einfüllöffnung (31) des Anbauteils (3) in die mindestens eine Öffnung (24) des Sandwichbauteils (2) eingebracht wird, derart, dass das Anbauteil (3) und das Sandwichbauteil (2) nach dem Aushärten der Polymerzusammensetzung (4) durch die Polymerzusammensetzung (4) miteinander verbunden werden, **dadurch gekennzeichnet, dass** die Polymerzusammensetzung (4) eine Topfzeit im Bereich von 1 bis 15 sek aufweist.

2. Verfahren nach Anspruch 1, wobei die erste Einfüllöffnung (31) in eine Kavität (5) zwischen dem Anbauteil (3) und dem Sandwichbauteil (2) mündet.

3. Verfahren nach Anspruch 1 oder 2, wobei die Polymerzusammensetzung (4) ein, insbesondere zwei-komponentiger, Klebstoff ist.

4. Verfahren nach einem der vorherigen Ansprüche, wobei die Polymerzusammensetzung (4) eine Topfzeit im Bereich von 2 bis 10 sek, bevorzugt 3 bis 7 sek, aufweist.

5. Verfahren nach einem der vorherigen Ansprüche, wobei die Polymerzusammensetzung (4) eine stoffschlüssige und/oder formschlüssige und/oder kraftschlüssige Verbindung bildet.

6. Verfahren nach einem der vorherigen Ansprüche, wobei die Polymerzusammensetzung (4) im Sandwichbauteil (2) eine Hinterschneidung (42) ausbildet.

7. Verfahren nach einem der vorherigen Ansprüche, wobei die Polymerzusammensetzung (4) im Anbauteil (3) eine Hinterschneidung (43) aufweist.

8. Verfahren nach einem der vorherigen Ansprüche, wobei die Polymerzusammensetzung (4) im Sandwichbauteil (2) eine maximale Ausdehnung (Aₘₐₓ) in einer Richtung parallel zu den Hauptflächen (25, 26) des Sandwichbauteils (2) aufweist, die grösser ist als der maximale Durchmesser (dₘₐₓ) der Öffnung (24) des Sandwichbauteils (2).

9. Verfahren nach einem der vorherigen Ansprüche, wobei die Öffnung (24) des Sandwichbauteils (2) ausgewählt ist aus der Gruppe Schlitz, Loch, insbesondere kreisrundes Loch.

10. Verfahren nach einem der vorherigen Ansprüche, wobei die mindestens eine Zwischenschicht (23) eine Hohlkammerstruktur (23a, 23b, 23c) aufweist.

11. Verfahren gemäss einem der vorherigen Ansprüche, wobei das Anbauteil (3) eine Platte; ein Verbindungselement und/oder Befestigungselement; eine Federung; ein elektrisches Element oder ein Beschlag ist.

12. Verwendung einer Polymerzusammensetzung (4) aufweisend eine Topfzeit im Bereich von 1 bis 15 sek, bevorzugt 2 bis 10 sek, besonders bevorzugt 3 bis 7 sek, zum Verbinden eines Anbauteils (3) mit einem Sandwichbauteil (2) in einem Verfahren gemäss einem der Ansprüche 1 bis 11.

13. Verwendung gemäss Anspruch 12, wobei die Polymerzusammensetzung (4) ein chemisch vernetzbarer Klebstoff, insbesondere ein ein-komponentiger oder zwei-komponentiger Klebstoff, oder ein Heissschmelzklebstoff, insbesondere ein Thermoplast, ist.

14. Verwendung gemäss Anspruch 12 oder 13, wobei die Polymerzusammensetzung (4) eine isocyanathaltige Komponente A und eine aminhaltige Komponente B umfasst, wobei die Komponente A ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3; und
die Komponente B wenigstens ein Di- und/oder Polyamin, vorzugsweise ein Polyetherdiamin und/oder Polyetherpolyamin enthält; und
wobei das stöchiometrische Verhältnis von Isocyanatgruppen in Komponente A zu Amingruppen in Komponente B 0,5 bis 1,2, besonders bevorzugt 1 beträgt.

15. Verbundbauteil (1) umfassend ein Sandwichbauteil (2) und ein Anbauteil (3), wobei das Sandwichbauteil (2) in einer ersten Hauptfläche (25) mit einer ersten Decklage (21) und/oder in einer zweite Hauptfläche (26) mit einer zweiten Decklage (22) mindestens eine vorgeformte Öffnung (24) aufweist, wobei das Anbauteil (3) eine vorgeformte Einfüllöffnung (31) aufweist und keine Sandwichplatte ist, **dadurch gekennzeichnet, dass** die Öffnung (24) des Sandwichbauteils (2) und die Einfüllöffnung (31) des Anbauteils (3) kommunizierend angeordnet sind und über eine ausgehärtete Polymerzusammensetzung (4) mit einer Topfzeit im Bereich von 1 bis 15 sek, bevorzugt 2 bis 10 sek, besonders bevorzugt 3 bis 7 sek, miteinander verbunden sind.

## Claims

1. Method for connecting an add-on component (3) to a sandwich component (2) comprising the steps:
a) Providing a sandwich component (2) comprising
- a first main surface (25) with a first cover layer (21) and a second main surface (26) with a second cover layer (22), in particular a first cover plate and a second cover plate, the first cover layer (21) and/or the second cover layer (22) having at least one opening (24); and
- at least one intermediate layer (23), the intermediate layer (23) being positioned between the first cover layer (21) and the second cover layer (22);
b) Providing an add-on component (3) with at least a first filling opening (31); wherein the add-on component is not a sandwich panel;
c) joining the add-on component (3) to the sandwich component (2) in such a way that the first filling opening (31) of the add-on part (3) and the at least one opening (24) of the sandwich component (2) are arranged in a communicating manner;
wherein a curable polymer composition (4) is introduced via the first filling opening (31) of the add-on component (3) into the at least one opening (24) of the sandwich component (2) in such a way that the add-on component (3) and the sandwich component (2) are bonded to one another by the polymer composition (4) after curing of the polymer composition (4), **characterized in that** the polymer composition (4) has a pot life in the range from 1 to 15 sec.

2. The method according to claim 1, wherein the first filling opening (31) opens into a cavity (5) between the add-on component (3) and the sandwich component (2).

3. The method according to claim 1 or 2, wherein the polymer composition (4) is an adhesive, in particular a two-component adhesive.

4. The method according to any one of the preceding claims, wherein the polymer composition (4) has a pot life in the range of 2 to 10 sec, preferably 3 to 7 sec.

5. The method according to any one of the preceding claims, wherein the polymer composition (4) forms an integral joint and/or form-fitting and/or force-fitting bond.

6. The method according to any one of the preceding claims, wherein the polymer composition (4) forms an undercut (42) in the sandwich component (2).

7. The method according to any one of the preceding claims, wherein the polymer composition (4) has an undercut (43) in the add-on component (3).

8. The method according to any one of the preceding claims, wherein the polymer composition (4) in the sandwich component (2) has a maximum expansion (Aₘₐₓ ) in a direction parallel to the main surfaces (25, 26) of the sandwich component (2) which is greater than the maximum diameter (dₘₐₓ ) of the opening (24) of the sandwich component (2).

9. The method according to any one of the previous claims, wherein the opening (24) of the sandwich component (2) is selected from the group slot, hole, in particular circular hole.

10. The method of any one of the preceding claims, wherein the at least one intermediate layer (23) comprises a hollow chamber structure (23a, 23b, 23c).

11. Method according to any one of the preceding claims, wherein the add-on component (3) is a plate; a connecting element and/or fastening element; a suspension; an electrical element or a fitting.

12. Use of a polymer composition (4) having a pot life in the range from 1 to 15 sec, preferably 2 to 10 sec, particularly preferably 3 to 7 sec, for bonding an add-on component (3) to a sandwich component (2) in a process according to any one of claims 1 to 11.

13. Use according to claim 12, wherein the polymer composition (4) is a chemically crosslinkable adhesive, in particular a one- or two-component adhesive, or a hot melt adhesive, in particular a thermoplastic.

14. Use according to claim 12 or 13, wherein the polymer composition (4) comprises an isocyanate-containing component A and an amine-containing component B, wherein
- component A is an isocyanate-terminated prepolymer having an isocyanate functionality of ≥ 1.7, preferably of 1.7 < f_{NCO} < 3, more preferably in the range of 2 to 3; and
- component B comprises at least one di- and/or polyamine, preferably a polyether diamine and/or polyether polyamine; and
wherein the stoichiometric ratio of isocyanate groups in component A to amine groups in component B is 0.5 to 1.2, particularly preferably 1.

15. Composite component (1) comprising a sandwich component (2) and an add-on component (3), the sandwich component (2) having at least one preformed opening (24) in a first main surface (25) with a first cover layer (21) and/or in a second main surface (26) with a second cover layer (22), the add-on component (3) having a preformed filling opening (31) and not being a sandwich panel, **characterized in that** the opening (24) of the sandwich component (2) and the filling opening (31) of the add-on component (3) are arranged in a communicating manner and are connected to one another via a cured polymer composition (4) with a pot life in the range from 1 to 15 sec, preferably 2 to 10 sec, particularly preferably 3 to 7 sec.

## Revendications

1. Procédé d'assemblage d'un composant complémentaire (3) avec un composant sandwich (2) comprenant les étapes suivantes :
a) Fournir un composant sandwich (2) comprenant
- une première surface principale (25) avec une première couche de couverture (21) et une deuxième surface principale (26) avec une deuxième couche de couverture (22), en particulier une premier plaque de couverture et une deuxième plaque de couverture, la première couche de couverture (21) et/ou la deuxième couche de couverture (22) présentant au moins une ouverture (24) ; et
- au moins une couche intermédiaire (23), la couche intermédiaire (23) étant positionnée entre la première couche de couverture (21) et la deuxième couche de couverture (22) ;
b) fournir le composant complémentaire un composant complémentaire(3) ayant au moins une première ouverture de remplissage (31); dans lequel le composant complémentaire n'est pas un panneau sandwich ;
c) assembler le composant complémentaire(3) au composant sandwich (2), de telle sorte que la première ouverture de remplissage (31) du composant complémentaire(3) et l'au moins une ouverture (24) du composant sandwich (2) soient disposées de manière à communiquer;
dans lequel une composition polymère durcissable (4) étant introduite par la première ouverture de remplissage (31) du composant complémentaire(3) dans l'au moins une ouverture (24) du composant sandwich (2), de telle sorte que le composant complémentaire(3) et le composant sandwich (2) sont reliées l'une à l'autre par la composition polymère (4) après le durcissement de la composition polymère (4), **caractérisé en ce que** la composition polymère (4) présente une durée de vie en pot dans la plage de 1 à 15 secondes.

2. Procédé selon la revendication 1, dans lequel la première ouverture de remplissage (31) débouche dans une cavité (5) entre le composant complémentaire (3) et le composant sandwich (2).

3. Procédé selon la revendication 1 ou 2, dans lequel la composition polymère (4) est un adhésif, en particulier à deux composants.

4. Procédé selon l'une quelconque des revendications précédentes, dans lequel la composition polymère (4) a une durée de vie en pot comprise entre 2 et 10 secondes, plus préférentiellement entre 3 et 7 secondes.

5. Procédé selon l'une quelconque des revendications précédentes, dans lequel la composition polymère (4) forme un assemblage par matière et/ou par forme et/ou par force.

6. Procédé selon l'une quelconque des revendications précédentes, dans lequel la composition polymère (4) forme une contre-dépouille (42) dans le composant sandwich (2).

7. Procédé selon l'une quelconque des revendications précédentes, dans lequel la composition polymère (4) présente une contre-dépouille (43) dans le composant complémentaire (3) .

8. Procédé selon l'une quelconque des revendications précédentes, dans lequel la composition polymère (4) dans le composant sandwich (2) a une extension maximale (Aₘₐₓ) dans une direction parallèle aux surfaces principales (25, 26) du composant sandwich (2) qui est supérieure au diamètre maximal (dₘₐₓ) de l'ouverture (24) du composant sandwich (2) .

9. Procédé selon l'une quelconque des revendications précédentes, dans lequel l'ouverture (24) du composant sandwich (2) est choisie dans le groupe constitué par une fente, un trou, notamment un trou circulaire.

10. Procédé selon l'une quelconque des revendications précédentes, dans lequel ladite au moins une couche intermédiaire (23) comprend une structure à chambres creuses (23a, 23b, 23c).

11. Procédé selon l'une quelconque des revendications précédentes, dans lequel le composant complémentaire (3) est une plaque ; un élément de liaison et/ou un élément de fixation; une suspension ; un élément électrique ou un raccord.

12. Utilisation d'une composition polymère (4) présentant une durée de vie en pot dans la plage de 1 à 15 secondes, de préférence de 2 à 10 secondes, de manière particulièrement préférée de 3 à 7 secondes, pour l'assemblage d'un composant complémentaire (3) avec un composant sandwich (2) dans un procédé selon l'une des revendications 1 à 11.

13. Utilisation selon la revendication 12, dans laquelle la composition polymère (4) est un adhésif chimiquement réticulable, en particulier un adhésif monocomposant ou bi-composant, ou un adhésif thermofusible, en particulier un thermoplastique.

14. Utilisation selon la revendication 12 ou 13, dans laquelle la composition polymère (4) comprend un composant A contenant un isocyanate et un composant B contenant une amine, dans laquelle
- le composant A est un prépolymère à terminaison isocyanate ayant une fonctionnalité isocyanate ≥ 1,7, de préférence de 1,7 < f_{NCO} < 3, de préférence encore dans la plage de 2 à 3 ; et
- le composant B contient au moins une di- et/ou polyamine, de préférence une polyéther diamine et/ou une polyéther polyamine ; et
dans laquelle le rapport stoechiométrique entre les groupes isocyanate dans le composant A et les groupes amine dans le composant B est compris entre 0,5 à 1,2; de manière particulièrement préférée de 1.

15. Composant composite (1) comprenant un composant sandwich (2) et un composant complémentaire (3), le composant sandwich (2) présentant au moins une ouverture préformée (24) dans une première surface principale (25) avec une première couche de couverture (21) et/ou dans une deuxième surface principale (26) avec une deuxième couche de couverture (22), le composant complémentaire (3) présentant une ouverture de remplissage préformée (31) et n'étant pas un panneau sandwich, **caractérisé en ce que** l'ouverture (24) du composant sandwich (2) et l'ouverture de remplissage (31) du composant complémentaire (3) sont disposées de manière à communiquer et sont reliées entre elles par l'intermédiaire d'une composition polymère durcie (4) ayant une durée de vie en pot dans la plage de 1 à 15 secondes, de préférence de 2 à 10 secondes, de manière particulièrement préférée de 3 à 7 secondes.
